(19) **Europäisches Patentamt / European Patent Office / Office européen des brevets**

(11) **EP 2 600 160 B1**

(12) **FASCICULE DE BREVET EUROPEEN**

(45) Date de publication et mention
de la délivrance du brevet:
**12.03.2014 Bulletin 2014/11**

(21) Numéro de dépôt: **12190675.4**

(22) Date de dépôt: **30.10.2012**

(51) Int Cl.:
*G01P 5/26* (2006.01)    *G01N 21/53* (2006.01)
*G01S 17/58* (2006.01)    *G01S 17/95* (2006.01)
*B64D 15/20* (2006.01)    *G08B 19/02* (2006.01)
*G01N 25/04* (2006.01)    *G01S 17/02* (2006.01)
*G01S 7/491* (2006.01)

(54) **Système et procédé de sonde d'anémométrie laser à détection cohérente continue, à mode monoparticule, capable de détecter des conditions givrantes et déterminer la sévérite de givrage**

Laseranemometer-System und -Verfahren mit kontinuierlicher kohärenter Erfassung im Monopartikelmodus und mit der Fähigkeit zur Erfassung der Bedingungen für eine Vereisung sowie der Schwere der Vereisung

System and method using a laser anemometric sensor with continuous coherent detection, in mono-particular mode, and the ability to detect freezing conditions and determine the severity of freezing

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2011 FR 1103680**

(43) Date de publication de la demande:
**05.06.2013 Bulletin 2013/23**

(73) Titulaire: **Thales**
**92200 Neuilly Sur Seine (FR)**

(72) Inventeurs:
• **Schlotterbeck, Jean-Pierre**
**26300 ROCHEFORT-SAMSON (FR)**
• **Lacondemine, Xavier**
**26000 VALENCE (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 0 663 592    EP-A1- 1 391 382**
**EP-A2- 2 282 216**

EP 2 600 160 B1

## Description

La présente invention porte sur un système de sonde d'anémométrie laser à détection cohérente continue, à mode monoparticule, capable de détecter des conditions givrantes et éventuellement de déterminer la sévérité de givrage, un aéronef équipé d'un tel système, et un procédé associé.

Il est bien connu, particulièrement dans le domaine aéronautique, que certaines gouttes d'eau surfondue peuvent conduire au givrage et présenter un danger pour l'avion non certifié dans ces conditions.

La protection contre le givrage a donné lieu à la réalisation de dispositifs préventifs ou correctifs. Les conditions de givrage se produisent lorsque l'atmosphère dans laquelle évolue l'appareil contient des gouttelettes en surfusion (eau liquide à température inférieure à la température du point de congélation). Le phénomène de givrage peut apparaître sur les parties protubérantes non protégées de l'aéronef.

Une détection des conditions givrantes induites par la présence d'eau surfondue peut aider le pilote pour la décision de déclenchement du dégivrage de l'avion.

L'installation d'un détecteur de sévérité de givrage, tels des barreaux vibrants, conduit à l'installation d'un équipement supplémentaire, ce qui nécessite un trou dans la peau d'avion, un surcoût, et une surconsommation de carburant.

De plus, le détecteur de sévérité de givrage commence à indiquer une information après le début du givrage, ce qui peut s'avérer trop tard, notamment s'il se trouve sur l'avion des points plus sollicités que le détecteur.

Il est connu l'utilisation d'un système à LiDAR fondé sur l'analyse de la dépolarisation du signal optique rétrodiffusé par une particule d'eau gelée.

Le document EP 1 391 382 A1 divulgue un système de sonde d'anémométrie lasser comprenant des moyens d'analyse des signaux de mesure, des moyens de mesure de la température, des moyens de détection de la présence des gouttes d'eau liquide, des moyens de détermination de conditions givrantes lorsque lesdits moyens de détection de la présence des gouttes d'eau liquide détectent la présence d'une goutte d'eau liquide. La détection des gouttes liquides est d'un côté fondée sur l'analyse de la dépolarisation du signal optique rétrodiffusé par des particules gelées et d'un autre côté sur l'analyse des longueurs d'onde résultant de la rétrodiffusion inélastique par des molécules d'azote et d'eau. Ce système donc besoin des moyens additionnels comme des moyens de polarisation et des moyens de détection du signal optique rétrodiffusé, qui opèrent dans des gammes de longueur d'onde (e.g. 408nm $H_2O$, 387nm $N_2$) différentes.

Un but de l'invention est de proposer une alternative fondée sur un système LiDAR n'exploitant pas la polarisation du signal optique rétrodiffusé.

Il est proposé, selon un aspect de l'invention, un système de sonde d'anémométrie laser à détection cohérente continue, à mode monoparticule, comprenant :

- des moyens d'analyse des signaux de mesure de ladite sonde ;
- des moyens de mesure de la température ;

caractérisé en ce qu'il comprend, en outre :

- des premiers moyens de comparaison d'un premier écart, sur une durée d'observation desdits signaux de mesure, entre la phase du signal mesuré par ladite sonde et une phase attendue, estimée à partir de valeurs de paramètres caractéristiques du faisceau laser émis par ladite sonde, correspondant au passage d'une particule sphérique, avec un premier seuil d'écart de phase ;
- des deuxièmes moyens de comparaison, d'un deuxième écart, sur ladite durée d'observation desdits signaux de mesure, entre l'amplitude du signal mesuré par ladite sonde et une amplitude attendue, estimée en fonction de valeurs de paramètres caractéristiques du faisceau laser émis par ladite sonde, correspondant au passage d'une particule sphérique, avec un deuxième seuil d'écart d'amplitude ;
- des troisièmes moyens de comparaison de ladite température avec un troisième seuil de température ;
- des moyens de détection de la présence d'une goutte d'eau liquide lorsque ledit premier écart est inférieur audit premier seuil et ledit deuxième écart est inférieur audit deuxième seuil ; et
- des moyens de détermination de conditions givrantes lorsque lesdits moyens de détection de la présence d'une goutte d'eau liquide détectent la présence d'une goutte d'eau liquide, et lorsque ladite température est inférieure audit troisième seuil.

Un tel système permet, à surcoût très faible, de détecter un risque de givrage, à partir d'une sonde d'anémométrie laser déjà présente .

L'invention s'applique à une sonde d'anémométrie laser, à détection cohérente et en configuration monoparticule. Dans un tel système, le signal résultant du passage d'une particule dans le faisceau (de profil généralement gaussien) est caractérisé par :

- la fréquence centrale, représentative de la vitesse de la particule (éventuellement modulée continûment si la particule coupe le faisceau dans une zone où les fronts d'onde sont incurvés) ;
- la durée, dépendant de la taille de la particule et du diamètre du faisceau au point où la particule le coupe ; et
- l'amplitude, dépendant de la puissance d'illumination et de la section efficace de rétrodiffusion de la particule.

Le diagramme de diffusion d'une particule dépend essentiellement de sa taille et de sa géométrie (rugosité ou présence de facettes, estimées à l'échelle de la longueur d'onde de l'illuminateur).

Lorsque la particule est une gouttelette liquide, la particule est globalement sphérique et présente un état de surface relativement lisse. La rétrodiffusion n'est alors que très peu sensible à l'orientation de la particule par rapport au faisceau (cette situation est bien décrite par la théorie de Mie).

Au contraire, lorsque la particule est un cristal de glace, le grand nombre de facettes produit un diagramme de diffusion complexe (grand nombre de lobes étroits) et la rétrodiffusion sera très sensible à l'orientation de la particule par rapport au faisceau.

Le signal résultant de la rétrodiffusion sur une particule à facettes telle qu'un cristal de glace se distingue du signal résultant de la rétrodiffusion sur une particule quasi-sphérique par la présence de brusques variations d'amplitude et de phase (à relativiser avec le bruit de mesure et les variations dues à la rugosité de la particule), correspondant à l'illumination consécutive de différentes facettes sous des angles différents.

Les conditions givrantes sont détectées par l'identification de particules sphériques (eau liquide) à basse température, typiquement une température inférieure à 10 °C. En effet la présence d'eau déjà gelée n'induit pas de concrétions sur les structures de l'aéronef et de l'eau liquide à température plus élevée ne risque pas de geler.

Dans un mode de réalisation, ladite sonde d'anémométrie laser délivre un faisceau à polarisation circulaire, de manière à conserver une sensibilité optimale, indépendamment des propriétés dépolarisantes de la cible (particule) et du milieu de propagation.

Dans un mode de réalisation, ledit premier seuil (S1) d'écart de phase est compris entre 0.1 et 1 radians, pour tenir compte des bruits de mesure, par exemple 0.2 radians.

En effet, ce seuil permet de tenir compte de légers écarts provenant de bruits de mesures, lorsque des gouttes d'eau liquide sont détectées.

Selon un mode de réalisation, ledit deuxième seuil d'écart d'amplitude est inférieur à 20% de ladite amplitude attendue.

De même, ce seuil permet de tenir compte de légers écarts provenant de bruits de mesures, lorsque des gouttes d'eau liquide sont détectées.

Dans un mode de réalisation précédente, ledit troisième seuil de température est compris entre 5 °C et 15 °C, par exemple 10 °C.

De telles valeurs de seuil de température, sont particulièrement adaptées à un environnement aéronautique. En outre la valeur de 10 °C permet de garder une marge d'erreur quasi nulle.

En outre, le système peut comprendre des moyens d'alerte pour prévenir d'un risque de givrage, adaptés pour être activés par des moyens de commande lorsque lesdits moyens de détermination détectent des conditions givrantes.

Ainsi, lorsque le système est embarqué sur un aéronef, le pilote et l'équipage peuvent être alertés. Ces moyens d'alertes peuvent être visuels, auditifs, les deux combinés, ou autres.

Dans un mode de réalisation, lesdits moyens de commande sont adaptés pour surveiller l'évolution de ladite température après détection de présence de gouttes d'eau liquide.

Ainsi, lorsque la présence de gouttes d'eau liquide est détectée, le système surveille l'évolution de la température pour facilement détecter des conditions givrante si cette dernière décroît, jusqu'à atteindre troisième seuil. Les moyens de commande pourraient même, par anticipation, alerter d'un risque de prochaine survenue de conditions givrantes.

Selon un mode de réalisation, lesdits moyens de commande sont adaptés pour surveiller la détection de présence de gouttes d'eau liquide après mesure de ladite température inférieure audit troisième seuil.

Ainsi, lorsqu'une température basse est détectée, le système surveille l'évolution de la détection de présence de gouttes d'eau liquide. Les moyens de commande pourraient même, par anticipation, alerter d'un risque de prochaine survenue de conditions givrantes.

Dans un mode de réalisation, le système comprend, en outre, des moyens de comptage des gouttes d'eau liquide détectées, et des moyens de détermination de la sévérité du givrage à partir dudit comptage des gouttes d'eau liquide détectées par seconde.

La nomenclature officielle définit quatre niveaux de givrage par ordre croissant de sévérité. La sévérité du givrage dépend du type d'appareil et des moyens de lutte dont il dispose. Un givrage considéré comme léger pour un avion de grande capacité peut être considéré comme modéré, voire sévère pour des appareils de faible gabarit. Dans le rapport concernant le crash du vol 4184, le NTSB recommande aux autorités, à la FAA en particulier, d'élaborer un système d'alerte qui doit rendre objectif les risques par type d'avion sans laisser de place aux interprétations :

1) Traces : Le givrage est perceptible. Le taux d'accumulation est légèrement supérieur au taux de sublimation. Il n'est pas dangereux même si les systèmes de dégivrage ou d'antigivrage ne sont pas utilisés sauf si ce phénomène est subi pendant une période prolongée (plus d'une heure).

2) Léger : le taux d'accumulation peut créer un problème si le vol se prolonge dans cet environnement (plus d'une heure). L'usage occasionnel des systèmes de dégivrage ou d'antigivrage enlève, respectivement prévient, l'accumulation. Cette accumulation ne présente aucun problème si les systèmes de dégivrage ou d'antigivrage sont utilisés.

3) Modéré : le taux d'accumulation est tel que même une exposition courte peut devenir potentiellement dangereuse. L'usage de systèmes de dégivrage ou d'antigivrage voire une modification de trajectoire sont nécessaires.

4) Sévère : le taux d'accumulation est tel que les systèmes de dégivrage ou d'antigivrage sont incapables de réduire ou de contrôler le danger. Une modification de trajectoire immédiate est nécessaire.

Selon un mode de réalisation, le système comprenant, en outre, des moyens d'estimation de la taille d'une goutte d'eau liquide détecté, lesdits moyens de détermination sont adaptés pour déterminer la sévérité du givrage, en outre à partir de ladite taille estimée des gouttes d'eau liquide détectées.

Ainsi, le système est capable de qualifier le risque de givrage avec un précision améliorée.

Par exemple, la taille d'une goutte d'eau liquide détectée est estimée à partir du rapport signal sur bruit et de la distance de passage de la particule par rapport au point focal, cette dernière étant déduite de la durée et de la variation de fréquence observées. Ces informations donnent accès à un minorant de la taille de la particule moyennant une hypothèse quant à sa composition chimique.

Dans un mode de réalisation, lesdits moyens de détermination sont adaptés pour déterminer la sévérité du givrage, en outre à partir de ladite température mesurée.

Ainsi, le système est capable de qualifier le risque de givrage avec un précision améliorée.

Selon un mode de réalisation, le système comprend en outre des moyens de comptage du nombre total de particules détectées, dans lequel le module de détermination est adapté pour déterminer la sévérité du givrage en outre à partir du nombre total de particules détectées et du nombre de gouttes d'eau liquide détectées, par exemple à partir d'un rapport ou ratio de ces deux nombres.

Ainsi, la précision est améliorée.

Dans un mode de réalisation, le système comprend en outre un module d'estimation de la masse totale des particules détectées à partir du nombre total de particules détectées, et un module d'estimation de la masse d'eau liquide détecté à partir du nombre de gouttes d'eau liquide ou particules sphériques détectées. Ledit module de détermination est adapté pour déterminer la sévérité du givrage, en outre à partir de la masse totale de particules détectées et de la masse d'eau liquide détectée, par exemple à partir d'un rapport ou ratio de ces deux masses.

Ainsi la précision est améliorée

Selon un aspect de l'invention, il est également proposé un aéronef équipé d'un système tel que décrit précédemment.

Selon un mode de réalisation, l'aéronef comprenant, en plus de la voie de mesure anémolaser incluant ladite sonde d'anémométrie laser, deux voies de mesure anémobarométrique, et des moyens de gestion desdites voies adaptés pour augmenter la pondération de prise en compte des informations transmises par ladite voie incluant ladite sonde d'anémométrie laser par rapport aux informations transmises par les deux autres voies de mesure anémobarométrique, lorsque des conditions givrantes sont détectées par lesdits moyens de détermination de conditions givrantes.

Ainsi, il est possible de pouvoir limiter ou annuler l'influence des mesures des voies de mesure anémobarométrique, lorsque la voie de mesure anémolaser incluant ladite sonde d'anémométrie laser détecte des conditions de givrage auxquelles les voies de mesure anémobarométrique sont bien plus sensibles. Aussi, la sécurité de fonctionnement de l'aéronef est fortement améliorée.

Selon un autre aspect de l'invention, il est également proposé un procédé d'anémométrie laser par sonde à détection cohérente continue, à mode monoparticule, dans lequel :

- on analyse des signaux de mesure de ladite sonde;
- on mesure la température ;

, et en outre :

- on compare un premier écart, sur une durée d'observation desdits signaux de mesure, entre la phase du signal mesuré par ladite sonde et une phase attendue, estimée à partir de valeurs de paramètres caractéristiques du faisceau laser émis par ladite sonde, correspondant au passage d'une particule sphérique, avec un premier seuil d'écart de phase ;
- on compare un deuxième écart, sur ladite durée d'observation desdits signaux de mesure, entre l'amplitude du signal mesuré par ladite sonde et une amplitude attendue, estimée en fonction de valeurs de paramètres caractéristiques du faisceau laser émis par ladite sonde, correspondant au passage d'une particule sphérique, avec un deuxième seuil d'écart d'amplitude ;
- on compare ladite température avec un troisième seuil de température ;
- on détecte la présence d'une goutte d'eau liquide lorsque ledit premier écart est inférieur audit premier seuil et ledit deuxième écart est inférieur audit deuxième seuil ; et
- on détermine des conditions givrantes lorsque ladite détection de la présence d'une goutte d'eau liquide détectent la présence d'une goutte d'eau liquide, et lorsque ladite température est inférieure audit troisième seuil.

L'invention sera mieux comprise à l'étude de quelques modes de réalisation décrits à titre d'exemples nullement limitatifs et illustrés par les dessins annexés sur lesquels :

- la figure 1 illustre un système de sonde d'anémométrie laser à détection cohérente continue, à mode monoparticule, capable de détecter de un risque de givrage, et optionnellement de déterminer la sévérité de givrage, selon un aspect de l'invention ;
- la figure 2 illustre un exemple de sonde d'anémométrie laser de la figure 1 ; et
- les figures 3a, 3b et 3c illustrent une mesure par la sonde d'anémométrie laser, selon un aspect de l'invention.

Sur l'ensemble de figures, les éléments ayant les mêmes références sont similaires.

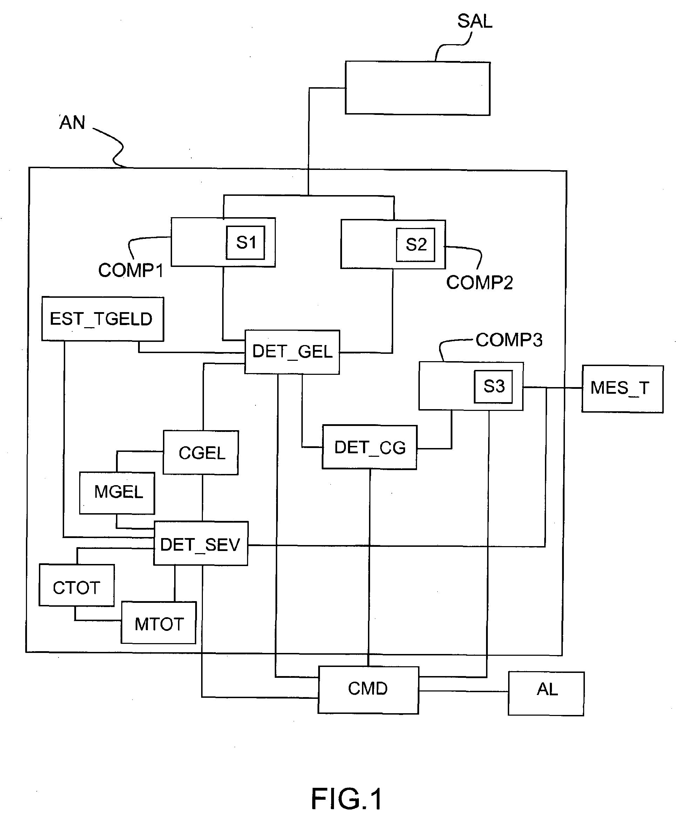

Tel qu'illustré sur la figure 1, un système de sonde d'anémométrie laser SAL à détection cohérente continue, à mode monoparticule, comprend des moyens d'analyse AN des signaux de mesure de ladite sonde d'anémométrie laser SAL, et un capteur de mesure MES_T de la température T. Le système comprend également un premier comparateur COMP1 d'un premier écart, sur une durée d'observation des signaux de mesure, entre la phase du signal mesuré par la sonde SAL et une phase attendue, estimée à partir de valeurs de paramètres caractéristiques du faisceau laser émis par la sonde SAL, correspondant au passage d'une particule sphérique, avec un premier seuil S1 de variation de phase. En outre, le système comprend un deuxième comparateur COMP2, d'un deuxième écart, sur la durée d'observation des signaux de mesure, entre l'amplitude du signal mesuré par la sonde SAL et une amplitude attendue, estimée en fonction de valeurs de paramètres caractéristiques du faisceau laser émis par la sonde SAL, correspondant au passage d'une particule sphérique, avec un deuxième seuil S2 de variation d'amplitude.

Un troisième comparateur COMP3 permet de comparer la température T mesurée avec un troisième seuil S3 de température, et un module de détection DET_GEL de la présence d'une goutte d'eau liquide lorsque le premier écart est inférieur au premier seuil S1 et le deuxième écart est inférieur au deuxième seuil S2. Le système comprend également un module de détermination DET_CG de conditions givrantes lorsque le module de détection DET_GEL de la présence d'une goutte d'eau liquide détecte la présence d'une goutte d'eau liquide, et lorsque la température T est inférieure au troisième seuil S3.

Par exemple, la sonde d'anémométrie laser SAL délivre un faisceau à polarisation circulaire, de manière à conserver une sensibilité optimale, indépendamment des propriétés dépolarisantes de la cible (particule) et du milieu de propagation.

La durée d'observation des signaux de mesure est au moins trois fois supérieure à la durée correspondant au passage d'une particule sphérique au travers du faisceau laser.

Par exemple, le premier seuil S1 de variation de phase est compris entre 0.1 et 1 radians, par exemple 0.2 radians, pour tenir compte des bruits de mesure, et le deuxième seuil S2 de variation d'amplitude est inférieur à 20% de ladite amplitude attendue. Le troisième seuil S3 de température est compris entre 5 °C et 15 °C, et par exemple 10 °C.

Le système de détection de risque de givrage SDG peut également comprendre, comme représenté sur l'exemple de la figure 1, un module d'alerte AL pour prévenir d'un risque de givrage, adapté pour être activé par un module de commande CMD lorsque le module de détermination DET_CG détecte des conditions givrantes.

Le module de commande CMD peut être adapté pour surveiller l'évolution de la température T après détection de présence de gouttes d'eau liquide. En variante, ou en combinaison, le module de commande CMD peut être adapté pour surveiller la détection de présence de gouttes d'eau liquide après mesure de la température T inférieure au troisième seuil S3.

Le système peut comprendre, en outre, un module de comptage CGEL des gouttes d'eau liquide détectées, un module de comptage CTOT du nombre total de particules détectées, un module d'estimation EST_MTOT de la masse totale des particules détectées à partir du nombre total de particules détectées, et un module d'estimation EST_MGEL de la masse d'eau liquide détectée à partir du nombre de gouttes d'eau liquide ou particules sphériques détectées.

Le module d'estimation EST_MGEL de la masse d'eau liquide détectée, ou LWC pour "liquid water content" en langue anglaise, peut effectuer son estimation à partir du nombre de gouttes d'eau liquide ou particules sphériques détectées par le module de comptage CGEL des gouttes d'eau liquide détectées et de la masse volumique de l'eau liquide.

Le module d'estimation EST_MTOT de la masse totale des particules détectées, ou TWC pour "total water content" en langue anglaise, peut effectuer son estimation à partir du nombre total de particules détectées par le module de comptage CTOT du nombre total de particules détectées, et les masses volumiques de l'eau liquide et de l'eau solide (glace).

Par exemple, les deux modules d'estimation de masse EST_MGEL et EST_MTOT peuvent effectuer leurs estimations respectives à partir de la taille ou d'un rayon équivalent r d'une particule, par le calcul de la masse d'une particule au moyen de la formule suivante :

$$\frac{4}{3} . \pi . r^3 . Coeff$$

dans laquelle Coeff est un coefficient de calibration qui tient compte de la masse volumique et d'éventuels autres paramètres de réglage liés au système de mesure. Le coefficient Coeff peut éventuellement être différent entre une particule liquide et une particule solide, tenant ainsi compte d'une différence de masse volumique et d'éventuels autres différences.

Le système comprend également des moyens de détermination DET_SEV de la sévérité du givrage à partir du comptage des gouttes d'eau liquide détectées par seconde, et/ou à partir de la taille estimée par un module d'estimation EST_TGELD des gouttes d'eau liquide détectées, et/ou de ladite température mesurée.

En outre, le module de détermination DET_SEV peut être adapté pour déterminer la sévérité du givrage en outre à partir du nombre total de particules détectées et du nombre de gouttes d'eau liquide ou particules sphériques détectées, et/ou à partir de la masse totale de particules détectées et de la masse d'eau liquide détectée. Par exemple, le module de détermination DET_SEV peut tenir compte d'un rapport ou ratio de ces deux nombres ou de ces deux masses, ou de pourcentages relatifs en nombre ou en masse de particules d'eau liquide et de particules d'eau (liquide et solide).

Un tel système est particulièrement bien adapté à un aéronef tel un avion ou un hélicoptère. En l'espèce le module d'alerte AL prévient le pilote d'un risque de givrage, et le pilote peut alors appliquer une procédure prévue en ce cas. Le module d'alerte AL, peut, par exemple, être réalisé sous forme d'une interface homme-machine, ou sous forme d'une alerte auditive.

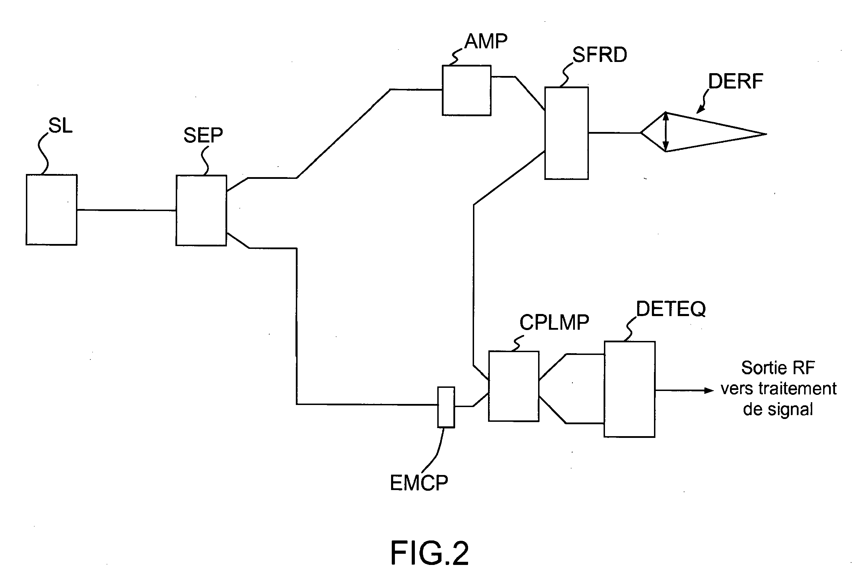

La figure 2 illustre un exemple de sonde d'anémométrie laser SAL. Ce type de sonde s'appuie sur une technique consistant à mesurer le décalage de fréquence, représentatif de la vitesse relative par rapport à l'air, entre un faisceau laser émis dans l'atmosphère et le faisceau rétrodiffusé par les aérosols naturels de l'air, utilisés comme des traceurs de champ de vent. On parle d'anémométrie laser Doppler longitudinale car le décalage de fréquence qui résulte de l'effet Doppler est directement proportionnel à la projection du vecteur vitesse sur l'axe de visée.

L'information utile, portée par le décalage de fréquence Doppler, est obtenue en effectuant une détection de type cohérent ; un faisceau issu d'une source de lumière cohérente, par exemple un laser, est séparé en deux faisceaux. Un premier faisceau appelé faisceau signal est envoyé dans la zone de mesure et un second faisceau appelé faisceau de référence ou oscillateur local constitue une référence pour la détection du décalage de fréquence Doppler.

Telle qu'illustrée sur la figure 2, la sonde d'anémométrie laser SAL comprend une source laser SL fournissant une onde de référence polarisée linéairement, un séparateur SEP séparant le signal en provenance de la source laser SL en un signal transmis vers un amplificateur AMP et un signal transmis vers un coupleur à maintien de polarisation CPLMP. La sonde d'anémométrie laser SAL comprend également un dispositif émetteur/récepteur DERF de faisceau selon la direction de l'axe de la sonde, ainsi qu'un séparateur de faisceau rétrodiffusé SFRD disposé entre l'amplificateur AMP et le dispositif émetteur/récepteur DERF et transmettant le signal en provenance de l'amplificateur AMP vers le dispositif émetteur/récepteur DERF. Le signal rétrodiffusé par le dispositif émetteur/récepteur DERF est transmis par le séparateur de faisceau rétrodiffusé SFRD vers le coupleur à maintien de polarisation CPLMP. sonde d'anémométrie laser mono-axe comprend, en outre, un élément de mise en cohérence de polarisation EMCP disposé en amont du coupleur à maintien de polarisation CPLMP afin d'assurer que le signal rétrodiffusé et l'onde de référence possèdent la même polarisation en entrée du coupleur à maintien de polarisation CPLMP, et un détecteur équilibré DETEQ disposé en aval du coupleur à maintien de polarisation CPLMP. Le coupleur à maintien de polarisation CPLMP fournit sur chaque voie de sortie la moitié du signal rétrodiffusé et la moitié de l'onde de référence. Les deux signaux de sortie du coupleur à maintien de polarisation sont transmis au détecteur équilibré DETEQ, qui, par exemple, comprend deux diodes, et délivre en sortie la différence des signaux fournis par les deux diodes La portion de chaque signal changeant de canal dans le coupleur à maintien de polarisation CPLMP subit un retard de phase et le battement produit lors de la détection sur les deux diodes du détecteur équilibré DETEQ sont en opposition de phase. La sortie différentielle permet donc d'additionner les puissances de signal reçues. Le signal de sortie du détecteur équilibré DETEQ est ensuite transmis à une unité de commande électronique non représentée, pour être traité.

Le phénomène de givrage est principalement dû à la présence d'eau liquide à température négative, ou, en d'autres termes à la présence d'eau en surfusion. Cette eau gèle instantanément au contact d'un élément ou d'une sonde.

Les gouttelettes d'eau sont de taille relativement importante, généralement d'un diamètre supérieur à 50 $\mu$m, ce qui permet de les détecter avec sonde d'anémométrie laser SAL en utilisant un faisceau relativement large et divergent, en fait en dehors du point de focalisation où sont détectées les petites particules utilisées pour la mesure de vitesse, de diamètre de l'ordre de 100nm.

La mesure anémométrique s'effectue au point de focalisation du faisceau, situé à une cinquantaine de centimètres de la sonde d'anémométrie laser SAL. Le volume de mesure ressemble à un ellipsoïde, de largeur maximale de l'ordre de 100 $\mu$m et de longueur de l'ordre de 1 cm.

Le signal provient de particules situées au delà du point de focalisation, une zone dans laquelle la sensibilité de détection diminue rapidement, du fait de la divergence du faisceau. Néanmoins, les gouttelettes d'eau à l'origine du phénomène de givrage étant de dimension élevée, de l'ordre de 10 à 100 $\mu$m, elles peuvent être visibles et ce pendant une durée importante, de l'ordre de 10 à 100 $\mu$s, le diamètre du faisceau étant important, de l'ordre de 1cm).

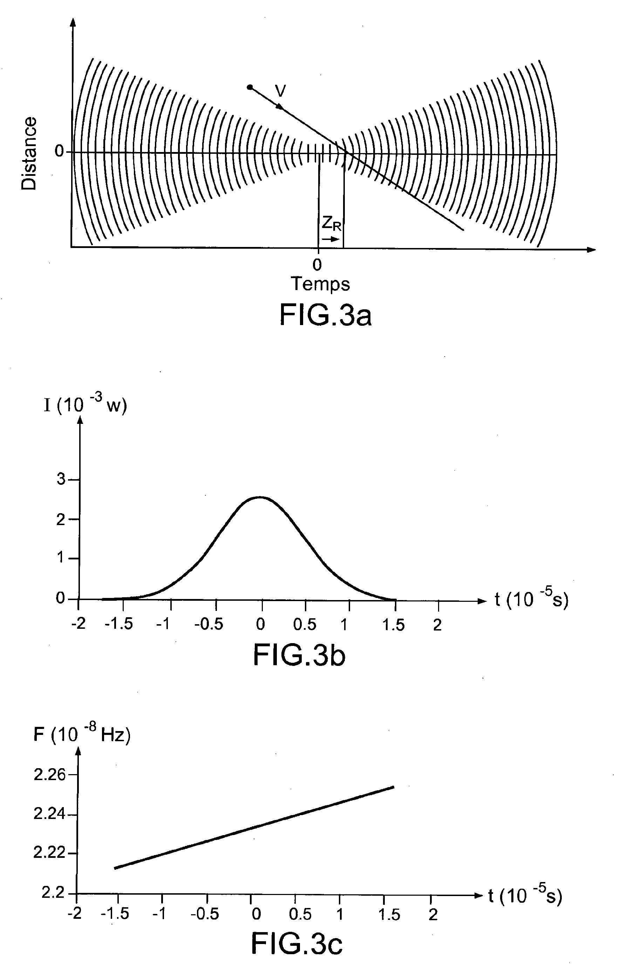

Comme illustré sur les figures 3a, 3b et 3c, quand une particule coupe le faisceau émis par la sonde d'anémométrie laser SAL, le signal électrique obtenu en sortie de la sonde d'anémométrie laser SAL est une impulsion ou "burst" en langue anglaise, le courant électrique étant proportionnel à la racine carrée de la puissance optique du signal rétrodiffusé.

Les figures 3a, 3b et 3c sont données à titre d'illustration, pour comprendre l'allure des signaux. En l'espèce si le rayon du faisceau au point de focalisation ou "waist" en langue anglosaxonne à $1/e^2$ (e étant le nombre exponentiel) vaut 50 $\mu$m, avec une vitesse de particule par rapport au faisceau égale à 200 m/s et un angle de 60° entre l'axe du faisceau et le vecteur vitesse, on obtient une vitesse longitudinale de 100 m/s soit une fréquence Doppler d'environ 130 MHz, et une vitesse transversale d'environ 173 m/s, pour une durée de d'impulsion de 580 ns. $Z_R$ correspond à la distance de Rayleigh qui est caractéristique car à une distance de $Z_R$ du point de focalisation, les fronts d'onde présentent leur courbure maximale. La variation de fréquence sur la durée de l'impulsion est alors maximale. $Z_R$ vaut environ 5 mm pour un rayon du faisceau au point de focalisation ou waist égal à 50 $\mu$m et une longueur d'onde de 1.5 $\mu$m.

La figure 3b représente une enveloppe gaussienne correspondant au profil d'éclairement (faisceau gaussien), i.e. à l'intensité I en fonction du temps t. L'intensité I correspond rigoureusement à la puissance optique, en W, reçue d'une particule de section efficace unité coupant le faisceau en $Z_0$=-0,20 m, à une vitesse de 200 m/s et un angle de 45° par rapport au faisceau, pour une puissance laser émise de 1 W, avec un rayon du faisceau au point de focalisation ou "waist" en langue anglaise de 50 $\mu$m.

La figure 3c illustre la modulation de la fréquence observée du fait de la courbure des front d'onde, pour une particule coupant le faisceau en $Z_0$=-0,20 m, le faisceau étant caractérisé par un rayon du faisceau au point de focalisation ou waist égal à 50 $\mu$m

Un tel système permet de détecter de risque de givrage est particulièrement bien adapté pour être embarqué à bord d'un aéronef.

En outre, si l'aéronef comprend, en plus de la voie de mesure anémolaser incluant ladite sonde d'anémométrie laser, deux voies de mesure anémobarométrique, et un module de gestion desdites voies adapté pour augmenter la pondération de prise en compte des informations transmises par la voie incluant la sonde d'anémométrie laser SAL par rapport aux informations transmises par les deux autres voies de mesure anémobarométrique, lorsqu'un risque de givrage est détecté.

**Revendications**

1. Système de sonde d'anémométrie laser (SAL) à détection cohérente continue, à mode monoparticule, comprenant :

   - des moyens d'analyse (AN) des signaux de mesure de ladite sonde (SAL) ;
   - des moyens de mesure (MES_T) de la température (T) ;

**caractérisé en ce qu'il** comprend, en outre :

   - des premiers moyens de comparaison (COMP1) d'un premier écart, sur une durée d'observation desdits signaux de mesure, entre la phase du signal mesuré par ladite sonde (SAL) et une phase attendue, estimée à partir de valeurs de paramètres caractéristiques du faisceau laser émis par ladite sonde, correspondant au passage d'une particule sphérique, avec un premier seuil (S1) d'écart de phase ;
   - des deuxièmes moyens de comparaison (COMP2), d'un deuxième écart, sur ladite durée d'observation desdits signaux de mesure, entre l'amplitude du signal mesuré par ladite sonde (SAL) et une amplitude attendue, estimée en fonction de valeurs de paramètres caractéristiques du faisceau laser émis par ladite sonde, correspondant au passage d'une particule sphérique, avec un deuxième seuil (S2) d'écart d'amplitude ;
   - des troisièmes moyens de comparaison (COMP3) de ladite température (T) avec un troisième seuil (S3) de température ;
   - des moyens de détection (DET_GEL) de la présence d'une goutte d'eau liquide lorsque ledit premier écart est inférieur audit premier seuil (S1) et ledit deuxième écart est inférieur audit deuxième seuil (S2) ; et
   - des moyens de détermination (DET_CG) de conditions givrantes lorsque lesdits moyens de détection (DET_GEL) de la présence d'une goutte d'eau liquide détectent la présence d'une goutte d'eau liquide, et lorsque ladite température (T) est inférieure audit troisième seuil (S3).

2. Système selon la revendication 1, dans lequel ladite sonde d'anémométrie laser (SAL) délivre un faisceau à polarisation circulaire.

3. Système selon l'une des revendications précédentes, dans lequel ledit premier seuil (S1) de variation de phase est compris entre 0.1 et 1 radian, pour tenir compte des bruits de mesure.

4. Système selon l'une des revendications précédentes, dans lequel ledit deuxième seuil (S2) d'écart d'amplitude est inférieur à 20% de ladite amplitude attendue.

5. Système selon l'une des revendications précédentes, dans lequel ledit troisième seuil (S3) de température est compris entre 5 °C et 15 °C.

6. Système selon la revendication 5, dans lequel ledit troisième seuil (S3) de température vaut sensiblement 10 °C.

**7.** Système selon l'une des revendications précédentes, comprenant des moyens d'alerte (AL) pour prévenir d'un risque de givrage, adaptés pour être activés par des moyens de commande (CMD) lorsque lesdits moyens de détermination (DET_CG) détectent des conditions givrantes.

**8.** Système selon la revendication 7, dans lequel lesdits moyens de commande (CMD) sont adaptés pour surveiller l'évolution de ladite température (T) après détection de présence de gouttes d'eau liquide.

**9.** Système selon la revendication 7 ou 8, dans lequel lesdits moyens de commande (CMD) sont adaptés pour surveiller la détection de présence de gouttes d'eau liquide après mesure de ladite température (T) inférieure audit troisième seuil (S3).

**10.** Système selon l'une des revendications précédentes, comprenant, en outre, des moyens de comptage (CGEL) des gouttes d'eau liquide détectées, et des moyens de détermination (DET_SEV) de la sévérité du givrage à partir dudit comptage des gouttes d'eau liquide détectées par seconde.

**11.** Système selon la revendication 10, comprenant, en outre, des moyens d'estimation de la taille d'une goutte d'eau liquide détectée (EST_TGELD), dans lequel lesdits moyens de détermination (DET_SEV) sont adaptés pour déterminer la sévérité du givrage, en outre à partir de ladite taille estimée des gouttes d'eau liquide détectées.

**12.** Système selon la revendication 10 ou 11, dans lequel lesdits moyens de détermination (DET_SEV) sont adaptés pour déterminer la sévérité du givrage, en outre à partir de ladite température mesurée (T).

**13.** Système selon la revendications 12, comprenant, en outre, des moyens de comptage (CTOT) du nombre total de particules détectées, dans lequel lesdits moyens de détermination (DET_SEV) sont adaptés pour déterminer la sévérité du givrage, en outre à partir du nombre total de particules détectées et du nombre de gouttes d'eau liquide ou particules sphériques détectées.

**14.** Système selon la revendication 13 en dépendance de la revendication 11, comprenant, en outre, des moyens d'estimation (EST_MTOT) de la masse totale des particules détectées à partir du nombre total de particules détectées, et des moyens d'estimation (EST_MGEL) de la masse d'eau liquide détecté à partir du nombre de gouttes d'eau liquide ou particules sphériques détectées, dans lequel lesdits moyens de détermination (DET_SEV) sont adaptés pour déterminer la sévérité du givrage, en outre à partir de la masse totale de particules détectées et de la masse d'eau liquide détectée.

**15.** Aéronef équipé d'un système selon l'une des revendications précédentes.

**16.** Aéronef selon la revendication 15, comprenant, en plus de la voie de mesure anémolaser incluant ladite sonde d'anémométrie laser (SAL), deux voies de mesure anémobarométrique, et des moyens de gestion desdites voies adaptés pour augmenter la pondération de prise en compte des informations transmises par ladite voie incluant ladite sonde d'anémométrie laser par rapport aux informations transmises par les deux autres voies de mesure anémobarométrique, lorsque des conditions givrantes sont détectées par lesdits moyens de détermination (DET_CG) de conditions givrantes.

**17.** Procédé d'anémométrie laser par sonde (SAL) à détection cohérente continue, à mode monoparticule, dans lequel :

- on analyse des signaux de mesure de ladite sonde (SAL) ;
- on mesure la température (T) ;

**caractérisé en ce que :**

- on compare un premier écart, sur une durée d'observation desdits signaux de mesure, entre la phase du signal mesuré par ladite sonde (SAL) et une phase attendue, estimée à partir de valeurs de paramètres caractéristiques du faisceau laser émis par ladite sonde, correspondant au passage d'une particule sphérique, avec un premier seuil (S1) d'écart de phase ;
- on compare un deuxième écart, sur ladite durée d'observation desdits signaux de mesure, entre l'amplitude du signal mesuré par ladite sonde (SAL) et une amplitude attendue, estimée en fonction de valeurs de paramètres caractéristiques du faisceau laser émis par ladite sonde, correspondant au passage d'une particule sphérique, avec un deuxième seuil (S2) d'écart d'amplitude ;
- on compare ladite température (T) avec un troisième seuil (S3) de température ;
- on détecte la présence d'une goutte d'eau liquide lorsque ledit premier écart est inférieur audit premier seuil (S1) et ledit deuxième écart est inférieur audit deuxième seuil (S2) ; et
- on détermine des conditions givrantes lorsque ladite détection de la présence d'une goutte d'eau liquide détectent la présence d'une goutte d'eau liquide, et lorsque ladite température (T) est inférieure audit troisième seuil (S3).

**Patentansprüche**

1. Laseranemometriesonden-(SAL)-System mit kontinuierlicher kohärenter Erfassung im Monopartikelmodus, das Folgendes umfasst:

   - Mittel (AN) zum Analysieren der Messsignale der Sonde (SAL);
   - Mittel (MES_T) zum Messen der Temperatur (T);

   **dadurch gekennzeichnet, dass** es ferner Folgendes umfasst:

   - erste Mittel (COMP1) zum Vergleichen einer ersten Verschiebung, über eine Beobachtungsdauer der Messsignale, zwischen der von der Sonde (SAL) gemessenen Phase des Signals und einer erwarteten Phase, geschätzt auf der Basis von Werten von Parametern, die für den von der Sonde emittierten Laserstrahl charakteristisch sind, entsprechend der Passage eines sphärischen Partikels, mit einer ersten Phasenverschiebungsschwelle (S1);
   - zweite Mittel (COMP2) zum Vergleichen einer zweiten Verschiebung, über die Beobachtungsdauer der Messsignale, zwischen der von der Sonde (SAL) gemessenen Amplitude des Signals und einer erwarteten Amplitude, geschätzt in Abhängigkeit von Werten von Parametern, die für den von der Sonde emittierten Laserstrahl charakteristisch sind, entsprechend der Passage eines sphärischen Partikels, mit einer zweiten Amplitudenverschiebungsschwelle (S2);
   - dritte Mittel (COMP3) zum Vergleichen der Temperatur (T) mit einer dritten Temperaturschwelle (S3);
   - Mittel (DET_GEL) zum Erfassen der Anwesenheit eines flüssigen Wassertropfens, wenn die erste Verschiebung unter der ersten Schwelle (S1) liegt und die zweite Verschiebung unter der zweiten Schwelle (S2) liegt; und
   - Mittel (DET_CG) zum Ermitteln von vereisten Bedingungen, wenn die Mittel (DET_GEL) zum Erfassen der Anwesenheit eines flüssigen Wassertropfens die Anwesenheit eines flüssigen Wassertropfens erfassen und wenn die Temperatur (T) unter der dritten Schwelle (S3) liegt.

2. System nach Anspruch 1, wobei die Laseranemometriesonde (SAL) einen kreispolarisierten Strahl liefert.

3. System nach einem der vorherigen Ansprüche, wobei die erste Phasenvariationsschwelle (S1) zwischen 0,1 und 1 radian liegt, um Messrauschen zu berücksichtigen.

4. System nach einem der vorherigen Ansprüche, wobei die zweite Amplitudenverschiebungsschwelle (S2) weniger als 20 % der erwarteten Amplitude ist.

5. System nach einem der vorherigen Ansprüche, wobei die dritte Temperaturschwelle (S3) zwischen 5°C und 15°C liegt.

6. System nach Anspruch 5, wobei die dritte Temperaturschwelle (S3) im Wesentlichen gleich 10°C ist.

7. System nach einem der vorherigen Ansprüche, das Warnmittel (AL) zum Anzeigen eines Vereisungsrisikos umfasst, wobei die Mittel so ausgelegt sind, dass sie von Steuermitteln (CMD) aktiviert werden, wenn die Ermittlungsmittel (DET_CG) Vereisungsbedingungen erfassen.

8. System nach Anspruch 7, wobei die Steuermittel (CMD) so ausgelegt sind, dass sie nach dem Erfassen der Anwesenheit von flüssigen Wassertropfen auf Änderungen der Temperatur (T) überwachen.

9. System nach Anspruch 7 oder 8, wobei die Steuermittel (CMD) zum Überwachen der Erfassung der Anwesenheit von flüssigen Wassertropfen ausgelegt sind, wenn gemessen wurde, dass die Temperatur (T) unter der dritten Schwelle (S3) liegt.

10. System nach einem der vorherigen Ansprüche, das ferner Mittel (CGEL) zum Zählen der erfassten flüssigen Wassertropfen und Mittel (DET_SEV) zum Ermitteln der Ernsthaftigkeit der Vereisung auf der Basis der Zahl der pro Sekunde erfassten flüssigen Wassertropfen umfasst.

11. System nach Anspruch 10, das ferner Mittel (EST_TGELD) zum Schätzen der Größe eines erfassten flüssigen Wassertropfens umfasst, wobei die Ermittlungsmittel (DET_SEV) zum Ermitteln der Ernsthaftigkeit der Vereisung weiterhin auf der Basis der geschätzten Größe der erfassten flüssigen Wassertropfen ausgelegt sind.

12. System nach Anspruch 10 oder 11, wobei die Ermittlungsmittel (DET_SEV) zum Ermitteln der Ernsthaftigkeit der Vereisung weiterhin auf der Basis der gemessenen Temperatur (T) ausgelegt sind.

13. System nach Anspruch 12, das ferner Mittel (CTOT) zum Zählen der Gesamtzahl von erfassten Partikeln umfasst, wobei die Ermittlungsmittel (DET_SEV) zum Ermitteln der Ernsthaftigkeit der Vereisung weiterhin auf der Basis der Gesamtzahl der erfassten Partikel und der Anzahl der erfassten flüssigen Wassertropfen oder sphärischen Partikel ausgelegt sind.

14. System nach Anspruch 13 in Abhängigkeit von Anspruch 11, das ferner Mittel (EST_MTOT) zum Schätzen der Gesamtmasse der erfassten Partikel auf der Basis der Gesamtzahl der erfassten Partikel sowie Mittel (EST_MGEL) zum Schätzen der Masse von flüssigem Wasser umfasst, das auf der Basis der Zahl der erfassten flüssigen Wassertropfen oder sphärischen Partikel erfasst wurde, wobei die Ermittlungsmittel (DET_SEV) zum Ermitteln der Ernsthaftigkeit der Vereisung weiterhin auf der Basis der Gesamtmasse der erfassten Partikel und der Masse von erfasstem flüssigem Wasser ausgelegt sind.

15. Flugzeug, das mit einem System nach einem der vorherigen Ansprüche ausgestattet ist.

16. Flugzeug nach Anspruch 15, das zusätzlich zu dem Laseranemometrie-Messkanal die Laseranemometriesonde (SAL), zwei anemobarometrische Messkanäle und Mittel zum Verwalten der Kanäle aufweist, wobei die Mittel zum Erhöhen der Gewichtung unter Berücksichtigung der von dem Kanal gesendeten Informationen einschließlich der Laseranemometriesonde in Bezug auf die von den beiden anderen anemobarometrischen Messkanälen gesendeten Informationen ausgelegt sind, wenn die Vereisungsbedingungen-Ermittlungsmittel (DET_CG) Vereisungsbedingungen erfassen.

17. Laseranemometriesonde-(SAL)-Verfahren mit kontinuierlicher kohärenter Erfassung im Monopartikelmodus, wobei:

- die Messsignale der Sonde (SAL) analysiert werden;
- die Temperatur (T) gemessen wird;

**dadurch gekennzeichnet, dass**:

- eine erste Verschiebung, über eine Beobachtungsdauer der Messsignale, zwischen der von der Sonde (SAL) gemessenen Phase des Signals und einer erwarteten Phase, geschätzt auf der Basis von Werten von Parametern, die für den von der Sonde emittierten Laserstrahl charakteristisch sind, entsprechend der Passage eines sphärischen Partikels, mit einer ersten Phasenverschiebungsschwelle (S1) verglichen wird;
- eine zweite Verschiebung, über die Beobachtungsdauer der Messsignale, zwischen der von der Sonde (SAL) gemessenen Amplitude des Signals und einer erwarteten Amplitude, geschätzt in Abhängigkeit von Werten von Parametern, die für den von der Sonde emittierten Laserstrahl charakteristisch sind, entsprechend der Passage eines sphärischen Partikels, mit einer zweiten Amplitudenverschiebungsschwelle (S2) verglichen wird;

- die Temperatur (T) mit einer dritten Temperaturschwelle (S3) verglichen wird;
- die Anwesenheit eines flüssigen Wassertropfens erfasst wird, wenn die erste Verschiebung unter der ersten Schwelle (S1) liegt und die zweite Verschiebung unter der zweiten Schwelle (S2) liegt; und
- Vereisungsbedingungen festgestellt werden, wenn die Erfassung der Anwesenheit eines flüssigen Wassertropfens die Anwesenheit eines flüssigen Wassertropfens erfasst und wenn die Temperatur (T) unter der dritten Schwelle (S3) liegt.

**Claims**

1. A laser anemometry probe (SAL) system with continuous coherent detection in mono-particle mode, comprising:

- means (AN) for analysing the measurement signals of said probe (SAL);
- means (MES_T) for measuring the temperature (T);

**characterised in that** it further comprises:

- first means (COMP1) for comparing a first shift, on a duration of observation of said measurement signals, between the phase of the signal measured by said probe (SAL) and an expected phase, estimated on the basis of values of parameters characteristic of the laser beam emitted by said probe, corresponding to the passage of a spherical particle, with a first phase shift threshold (S1);
- second means (COMP2) for comparing a second shift, on said duration of observation of said measurement signals, between the amplitude of the signal measured by said probe (SAL) and an expected amplitude, estimated as a function of values of parameters characteristic of the laser beam emitted by said probe, corresponding to the passage of a spherical particle, with a second amplitude shift threshold (S2);
- third means (COMP3) for comparing said temperature (T) with a third temperature threshold (S3);
- means (DET_GEL) for detecting the presence of a liquid water drop when said first shift is below said first threshold (S1) and said second shift is below said second threshold (S2); and
- means (DET_CG) for determining icing conditions when said means (DET_GEL) for detecting the presence of a liquid water drop detect the presence of a liquid water drop, and when said temperature (T) is below said third threshold (S3).

2. The system according to claim 1, wherein said laser anemometry probe (SAL) delivers a beam with circular polarisation.

3. The system according to any one of the preceding claims, wherein said first phase variation threshold (S1) is between 0.1 and 1 radian in order to take into account measurement noise.

4. The system according to any one of the preceding claims, wherein said second amplitude shift threshold (S2) is less than 20% of said expected amplitude.

5. The system according to any one of the preceding claims, wherein said third temperature threshold (S3) is between 5°C and 15°C.

6. The system according to claim 5, wherein said third temperature threshold (S3) is substantially equal to 10°C.

7. The system according to any one of the preceding claims, comprising warning means (AL) for indicating a risk of icing, which means are designed to be activated by control means (CMD) when said determining means (DET_CG) detect icing conditions.

8. The system according to claim 7, wherein said control means (CMD) are designed to monitor changes in said temperature (T) after the presence of liquid water drops has been detected.

9. The system according to claim 7 or 8, wherein said control means (CMD) are designed to monitor the detection of the presence of liquid water drops after said temperature (T) has been measured to be below said third threshold (S3).

10. The system according to any one of the preceding claims, further comprising means (CGEL) for counting the detected liquid water drops and means (DET_SEV) for determining the severity of the icing on the basis of said count of the liquid water drops detected per second.

11. The system according to claim 10, further comprising means (EST_TGELD) for estimating the size of a detected liquid water drop, wherein said determination means (DET_SEV) are designed to determine the severity of the icing furthermore on the basis of said estimated size of the detected liquid water drops.

12. The system according to claim 10 or 11, wherein said determination means (DET_SEV) are designed to determine the severity of the icing furthermore on the basis of said measured temperature (T).

13. The system according to claim 12, further comprising means (CTOT) for counting the total number of detected particles, wherein said determination means (DET_SEV) are designed to determine the severity of the icing furthermore on the basis of the total number of detected particles and on the number of detected liquid water drops or spherical particles.

14. The system according to claim 13 as dependent on claim 11, further comprising means (EST_MTOT) for estimating the total mass of the particles detected on the basis of the total number of detected particles and means (EST_MGEL) for estimating the mass of liquid water detected on the basis of the number of detected liquid water drops or spherical particles, wherein said determination means (DET_SEV) are designed to determine the severity of the icing furthermore on the basis of the total mass of detected particles and of the mass of detected liquid water.

15. An aircraft equipped with a system according to any one of the preceding claims.

16. The aircraft according to claim 15, comprising, in addition to the laser anemometry measurement channel including said laser anemometry probe (SAL), two anemobarometric measurement channels and means for managing said channels, which means are designed to increase the weighting for taking into account information transmitted by said channel including said laser anemometry probe in relation to the information transmitted by the other two anemobarometric measurement channels, when icing conditions are detected by said means (DET_CG) for determining icing conditions.

17. A laser anemometry probe (SAL) method with continuous coherent detection in mono-particle mode, wherein:

　　- the measurement signals of said probe (SAL) are analysed;
　　- the temperature (T) is measured;

**characterised in that**:

　　- a first shift is compared, on a duration of observation of said measurement signals, between the phase of the signal measured by said probe (SAL) and an expected phase, estimated on the basis of values of parameters characteristic of the laser beam emitted by said probe, corresponding to the passage of a spherical particle, with a first phase shift threshold (S1);
　　- a second shift is compared, on said duration of observation of said measurement signals, between the amplitude of the signal measured by said probe (SAL) and an expected amplitude, estimated as a function of values of parameters characteristic of the laser beam emitted by said probe, corresponding to the passage of a spherical particle, with a second amplitude shift threshold (S2);

- said temperature (T) is compared with a third temperature threshold (S3);

- the presence of a liquid water drop is detected when said first shift is below said first threshold (S1) and said second shift is below said second threshold (S2); and

- icing conditions are determined when said detection of the presence of a liquid water drop detects the presence of a liquid water drop and when said temperature (T) is below said third threshold (S3).

FIG.1

FIG.2

EP 2 600 160 B1

FIG.3a

FIG.3b

FIG.3c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1391382 A1